Europäisches Patentamt

(19) **European Patent Office**

**Office européen des brevets**

(11) Numéro de publication: **0 112 201**
**B1**

(12) **FASCICULE DE BREVET EUROPEEN**

(45) Date de publication du fascicule du brevet:
**16.07.86**

(51) Int. Cl.⁴: **B 62 D 5/08**

(21) Numéro de dépôt: **83402185.9**

(22) Date de dépôt: **10.11.83**

(54) **Distributeur hydraulique pour servomécanisme à réaction sur l'organe d'entrée.**

(30) Priorité: **13.11.82 ES 517365**

(43) Date de publication de la demande:
**27.06.84 Bulletin 84/26**

(45) Mention de la délivrance du brevet:
**16.07.86 Bulletin 86/29**

(84) Etats contractants désignés:
**DE FR GB IT**

(56) Documents cités:
**EP - A - 0 011 036**
**EP - A - 0 066 507**
**EP - A - 0 072 731**
**EP - A - 0 084 487**
**FR - A - 2 308 001**
**FR - A - 2 435 380**
**FR - A - 2 442 753**

(73) Titulaire: **BENDIBERICA S.A., Balmès 243,**
**Barcelona 6 (ES)**

(72) Inventeur: **Simon Bacardit, Calle Mallorca 451,**
**Barcelona 13 (ES)**

(74) Mandataire: **Le Moenner, Gabriel et al, SERVICE**
**BREVETS BENDIX 44, Rue François 1er, F-75008 Paris**
**(FR)**

ACTORUM AG

## Description

La présente invention concerne les distributeurs hydrauliques pour servomécanisme, notamment pour directions assistées de véhicules, et plus particulièrement les distributeurs hydrauliques du type comprenant un organe primaire et un organe secondaire définissant mutuellement des moyens de valves de distribution entre une source de pression et un décharge pour un dispositif d'assistance et associés par l'intermédiaire d'un accouplement à course morte permettant un déplacement relatif limité entre les organes primaire et secondaire de part et d'autre d'une position centrale, l'organe primaire étant relié à un organe d'actionnement d'entrée du distributeur et à un dispositif de réaction à chambres opposées actionné hydrauliquement par des pressions de réaction fournies, à partir d'une source de pression, par un moyen de valve à fonction logique OU de présélection du sens de la réaction à appliquer en fonction du déplacement relatif entre les organes primaire et secondaire du distributeur. Un tel distributeur hydraulique est décrit dans le document EP-A-0 084 087 au nom de la demanderesse, publié le 27.07.83 [Etat de la technique selon l'Art. 54(3) CBE].

La fonction OU est en pratique généralement réalisée au moyen d'une valve à commutation électromagnétique contrôlée par des circuits de contrôle logiques existant actuellement sur certains véhicules ou bien par une simple commande manoeuvrée par le conducteur. Dans tous les cas, la valve occupe un certain espace additionnel, requiert l'installation de tuyauteries de raccordement et nécessite un certain temps de montage.

La présente invention a pour but d'améliorer ce type de distributeur hydraulique en incorporant le moyen de valve à fonction OU dans le distributeur même et en le rendant indépendant des cavités de travail du distributeur, ce qui permet de supprimer la nécessité d'une valve de commutation externe et des tuyauteries d'installation qui la relient au distributeur hydraulique, et donc de simplifier notablement les travaux d'installation et d'entretien tout en augmentant la fiabilité et les possibilités d'adaptation du système.

A cet effet, selon une caractéristique de la présente invention, le moyen de valve à fonction OU est constitué par des paires de bords coopérants opposés définis, d'une part, par deux premières cavités espacées l'une de l'autre dans la direction de déplacement relatif entre les organes primaire et secondaire, formées dans la surface de travail de l'un de ces organes primaire et secondaire et communiquant en parallèle avec la décharge et avec les deux côtés du dispositif de réaction, et d'autre part, par une troisième cavité formée dans la surface de travail de l'autre des organes primaire et secondaire, entre les deux premières cavités et communiquant en permanence avec une source de pression de réaction.

Dans une forme de réalisation préférée de l'invention, les deux premières cavités sont formées dans les surfaces de travail du rotor ou du stator d'un distributeur hydraulique à rotor en étoile et la troisième cavité est formée sur la surface de travail complémentaire de la précédente du stator ou du rotor du distributeur en question.

Selon une caractéristique plus particulière, chacune des premières cavités communique avec une chambre de réaction correspondante du dispositif de réaction incorporé dans le distributeur même.

Bien qu'il soit possible de construire des distributeurs qui répondent aux caractéristiques énoncées ci-dessus, du type dit «à centre fermé», les perfectionnements de la présente invention conviennent plus particulièrement aux systèmes de distributeurs du type «à centre ouvert», c'est-à-dire où les extrémités de la troisième cavité décrite plus haut recouvrent légèrement les extrémités des deux premières cavités en position centrale de repos du distributeur, tandis que, lors du fonctionnement de celui-ci, ce recouvrement s'annule à l'une des extrémités de la troisième cavité et augmente à l'autre jusqu'à ce que l'amplitude atteinte corresponde au déplacement maximum relatif des deux organes du distributeur.

Les dessins joints illustrent à titre d'exemples non limitatifs de la portée de la présente invention et en représentations schématiques, certaines formes préférées de réalisation pratique de celle-ci. Sur ces dessins:

la figure 1 est un diagramme d'un premier mode de réalisation d'un distributeur hydraulique selon l'invention;

la figure 2 est un diagramme équivalent d'un autre mode de réalisation de l'invention;

les figures 3, 4 et 5 sont des schémas développés en vue partielle d'un distributeur rotatif en étoile à centre ouvert, correspondant au diagramme de la figure 1 et qui représentent respectivement la position centrale de repos et deux positions de fonctionnement distinctes dudit distributeur;

les figures 6, 7 et 8 sont des vues schématiques de face de la réalisation pratique d'un distributeur conforme aux figures 3 à 5, avec couvercle frontal de stator déposé, dans des positions correspondant à ces figures 3 à 5;

la figure 9 représente la caractéristique de fonctionnement de ce distributeur;

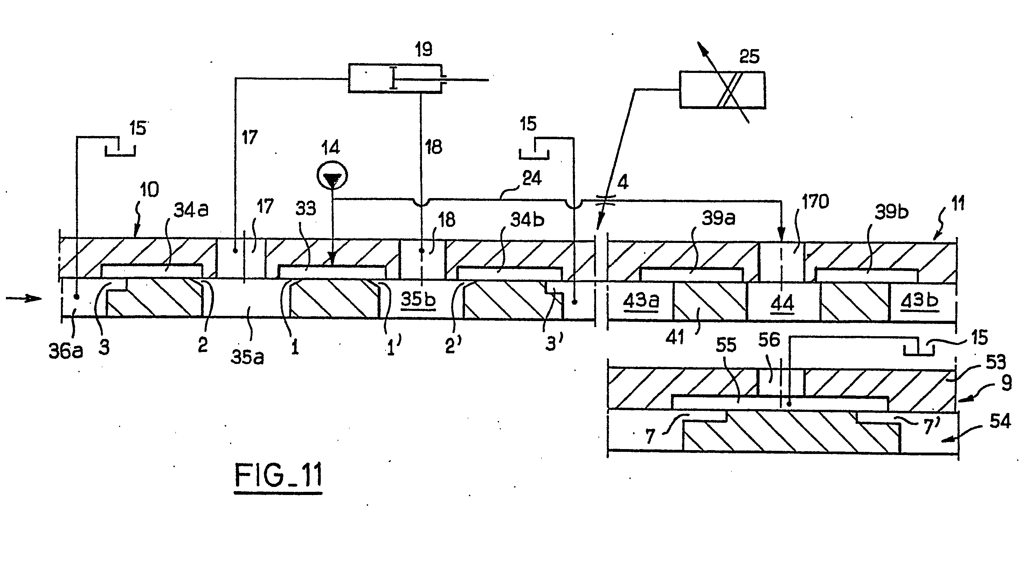

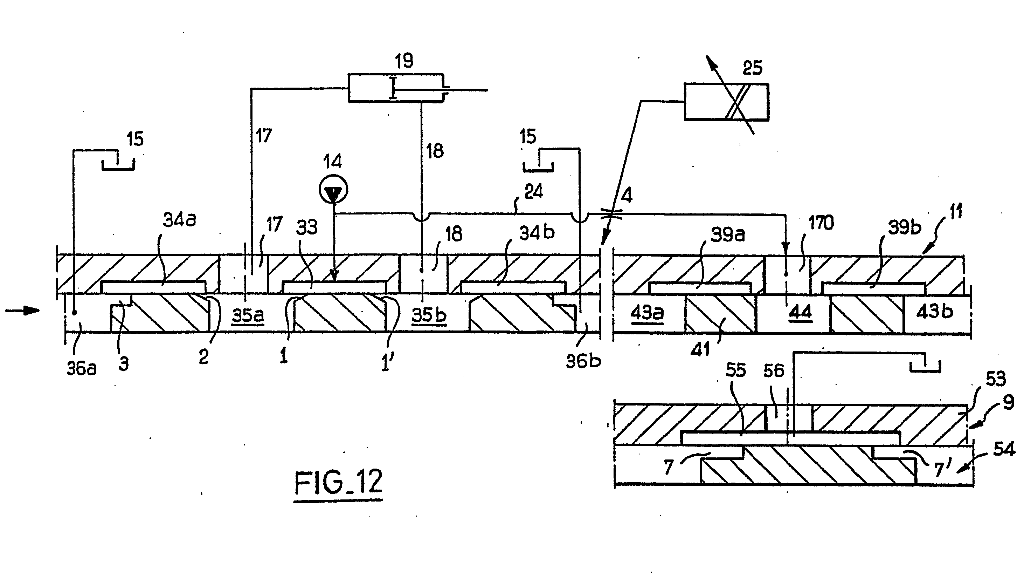

les figures 10, 11 et 12 sont des schémas développés en vue partielle d'un distributeur rotatif en étoile à centre ouvert correspondant au diagramme de la figure 2, et qui représentent respectivement la position centrale de repos et deux positions de fonctionnement distinctes dudit distributeur; et

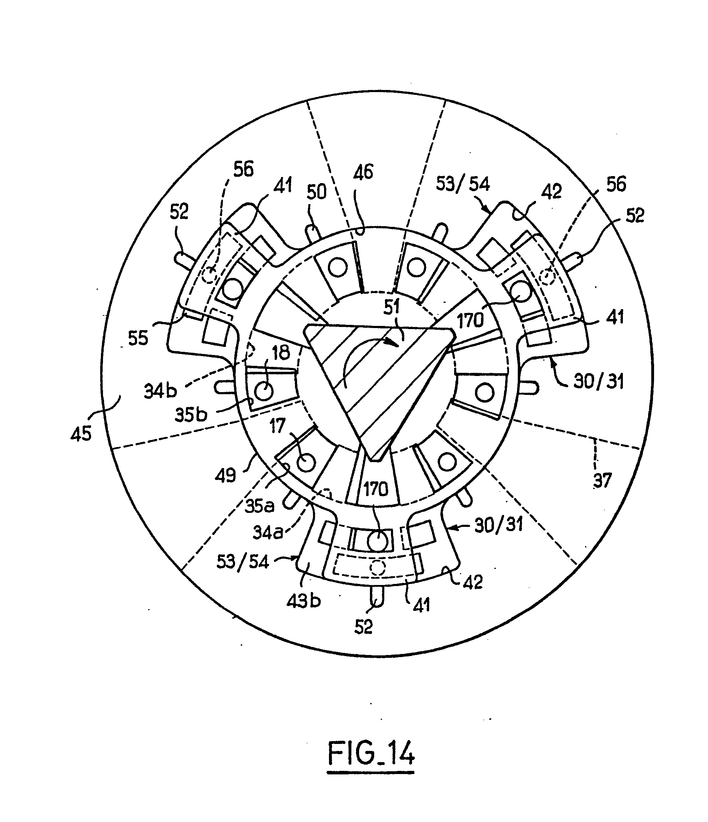

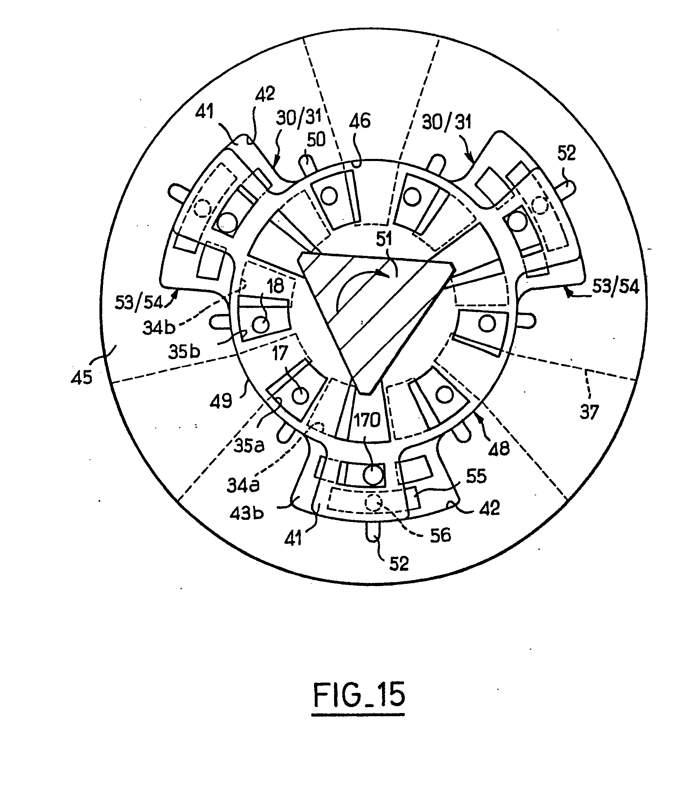

les figures 13 à 15 sont des vues de face de la forme de réalisation pratique d'un distributeur conforme aux figures 10 à 12 avec couvercle frontal déposé et dessinées dans les positions correspondant à ces figures.

Dans la description qui va suivre, et sur les dessins, les éléments identiques ou analogues portent les mêmes chiffres de référence.

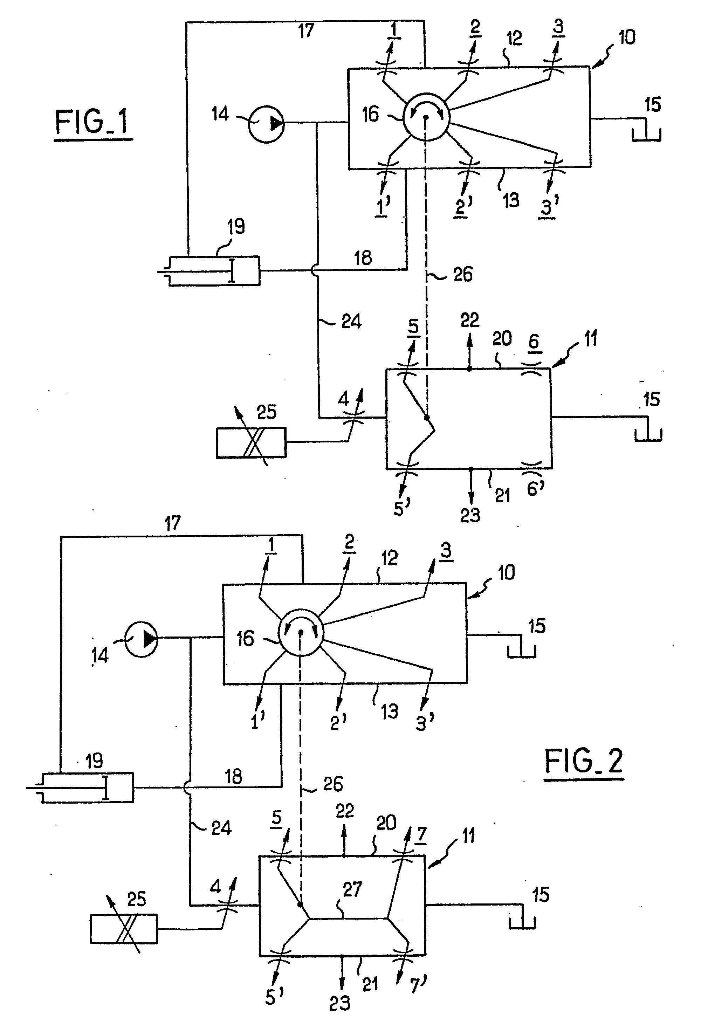

La figure 1 représente le diagramme fonctionnel d'un premier mode de réalisation d'un distributeur pour mécanismes de direction à assistance hydraulique pour véhicules automobiles selon l'invention, qui, dans la pratique, peut être réalisé dans diverses formes de construction connues, telles que par exemple des dispositifs à valves indépendantes du type à rotor et stator coaxial rainuré ou, de préférence, un distributeur discoïde à rotor en étoile, tel que décrit par exemple dans la demande de brevet EP-A-0 021 970 de la demanderesse.

Le distributeur de la figure 1 comprend essentiellement deux ensembles 10 et 11, correspondant respectivement au distributeur proprement dit et à une combinaison d'un moyen de valve à fonction OU et d'un dispositif régulateur de réaction, incorporés dans un même corps de distributeur conformément à l'invention, comme décrit plus loin.

L'ensemble distributeur 10 comprend deux circuits parallèles 12 et 13 où sont intercalés en série des étranglements ou restrictions variables 1, 2 et 3-1′, 2′ et 3′, respectivement. Les deux circuits s'étendent entre une source de liquide hydraulique sous pression 14 et une bâche ou décharge 15. Les étranglements sont actionnés simultanément par des organes appropriés à chaque cas, à partir de l'organe mobile de commande du distributeur, indiqué par le repère 16. D'entre les étranglements 1 et 2, 1′ et 2′ de chaque circuit 12 et 13, partent des conduits 17 et 18, respectivement, qui aboutissent aux chambres opposées d'un actionneur d'assistance à double effet symbolisé par le vérin 19 et qui peut adopter toutes les formes usuelles employées dans la pratique, telles que par exemple un simple vérin ou un ensemble piston-écrou jouant dans un cylindre formé dans un boîtier de direction par exemple.

L'ensemble 11 comprend quant à lui deux autres circuits parallèles distincts 20 et 21 pourvu chacun de deux étranglements en séries respectivement 5 et 6 et 5′-6′ d'entre lesquels partent des conduits 22 et 23 qui conduisent aux chambres opposées d'un actionneur de réaction à double effet, telles que par exemple les deux chambres situées des deux côtés d'un bras de rotor à réaction d'un distributeur à rotor en étoile. La pression de la source 14 est acheminée à l'ensemble 11 par le conduit 24 où est intercalé un dispositif d'étranglement variable 4 contrôlé extérieurement, par exemple, au moyen d'un actionneur électromagnétique 25 commandé par des dispositifs électroniques de contrôle de marche et de direction dont certains véhicules sont actuellement dotés; l'échappement s'effectue de même vers la décharge 15. L'actionnement des étranglements variables amont 5 et 5′ est assuré à partir de l'organe de commande mobile 16 du distributeur par des moyens appropriés à chaque cas et représentés conventionnellement par la ligne 26. Ces deux étranglements constituent ensemble une valve à fonction OU qui, dans une toute première phase de fonctionnement de distributeur, sélectionne le sens d'application de la force de réaction sur le mécanisme de direction, puis règle ensuite l'amplitude de ces forces de réaction pour adapter la conduite à certaines normes préétablies.

Le mode de réalisation de la figure 2, où les éléments identiques ou analogues sont désignés par les mêmes repères numériques, se distingue du précédent par les étranglements aval 7 et 7′ remplaçant les étranglements fixes 6 et 6′ et qui sont également modulables et actionnés en même temps que les étranglements 5 et 5′, par l'intermédiaire de la commande figurée en 27.

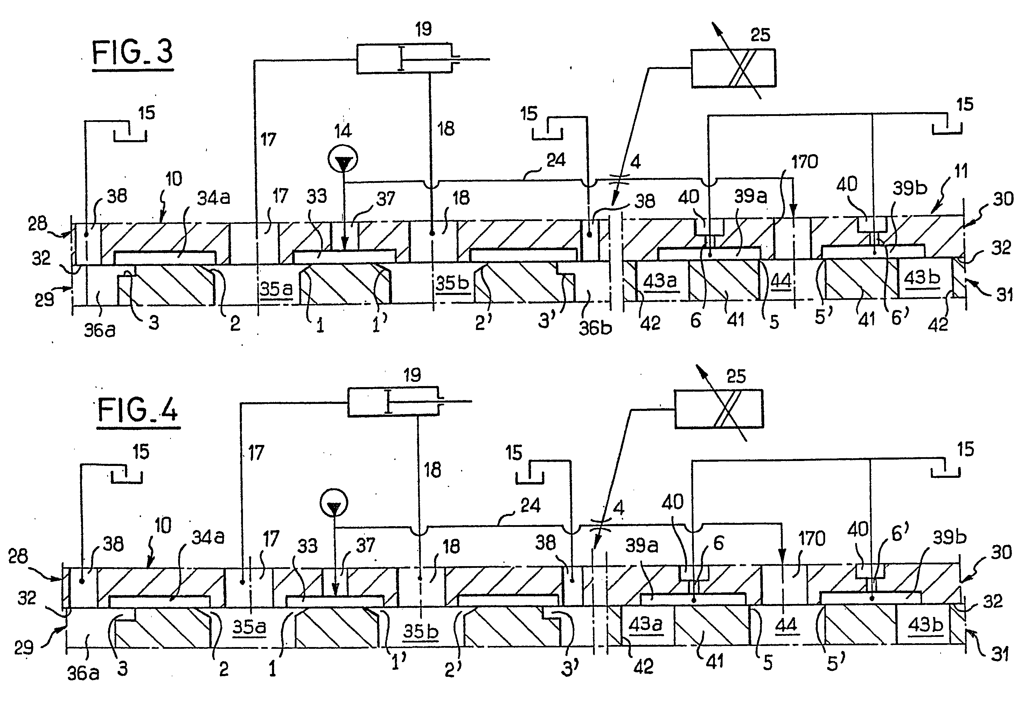

Les deux distributeurs décrits sont de préférence du type distributeurs à rotor en étoile. Le premier cas est représenté sur la figure 3 où l'on illustre sous forme développée une partie de stator discoïde du distributeur indiquée par le repère 28, qui comprend les éléments de l'ensemble 10 de la figure 1, et une partie de stator 30 qui comprend les éléments de l'ensemble 11. On trouve en face de ces parties de stator les parties de rotor correspondantes 29 et 31.

Sur la partie de stator 28, la surface de travail définie par le plan d'interface 32 comporte une cavité d'entrée 33 flanquée de deux cavités de distribution 34a et 34b et sur la partie de rotor 29 adjacente, dont la surface de travail coïncide également avec le plan 32, sont formés une paire de cavités de travail 35a et 35b situées de part et d'autre de la cavité d'entrée 33 du stator et deux cavités de décharge 36a et 36b situées au-delà des cavités de travail, dans les deux sens, par rapport à la cavité d'entrée 33. La cavité d'entrée 33 est raccordée au conduit 37 provenant de la source de pression 14; les deux cavités de travail 35a, 35b sont raccordées, par les conduits respectifs 17 et 18, aux deux extrémités de l'actionneur d'assistance 19, tandis que les cavités de décharge 36a, 36b sont reliées par les conduits 38 à la décharge 15.

Les parties de stator 30 et de rotor 31 comportent également des surfaces de travail ajustées en coïncidence avec le plan d'interface 32. Le conduit 24 d'entrée de pression de réaction modulée extérieurement par l'étranglement réglable 4 débouche dans l'interface par une ouverture d'entrée 170 formée dans la partie de stator 30 tandis que la surface du stator est munie, de chaque côté de cette ouverture 170, de deux cavités de réaction 39a et 39b d'où partent les conduits 40 qui aboutissent à la décharge 15. La partie 31 du rotor forme un bras de réaction 41 disposé dans une cavité de réaction 42 du stator de manière à définir à l'intérieur de celle-ci deux chambres de réaction 43a et 43b de part et d'autre du bras 41. En position de repos, le bras 41 est centré sur l'ensemble des deux cavités de réaction 39a et 39b et ses bords extérieurs sont largement séparés des extrémités opposées de ces cavités, ce qui fait qu'elles communiquent franchement avec les chambres de réaction 43a et 43b, respectivement. Dans ce cas, les étranglements fixes 6 et 6′ sont constitués par des passages calibrés désignés par les mêmes références dans les embouchures des conduits de décharge 40 dans le stator 30. Le bras de réaction 41 est muni d'une lumière centrale 44 qui, en position de repos, recouvre très légèrement les extrémités adjacentes des cavités de réaction 39a et 39b.

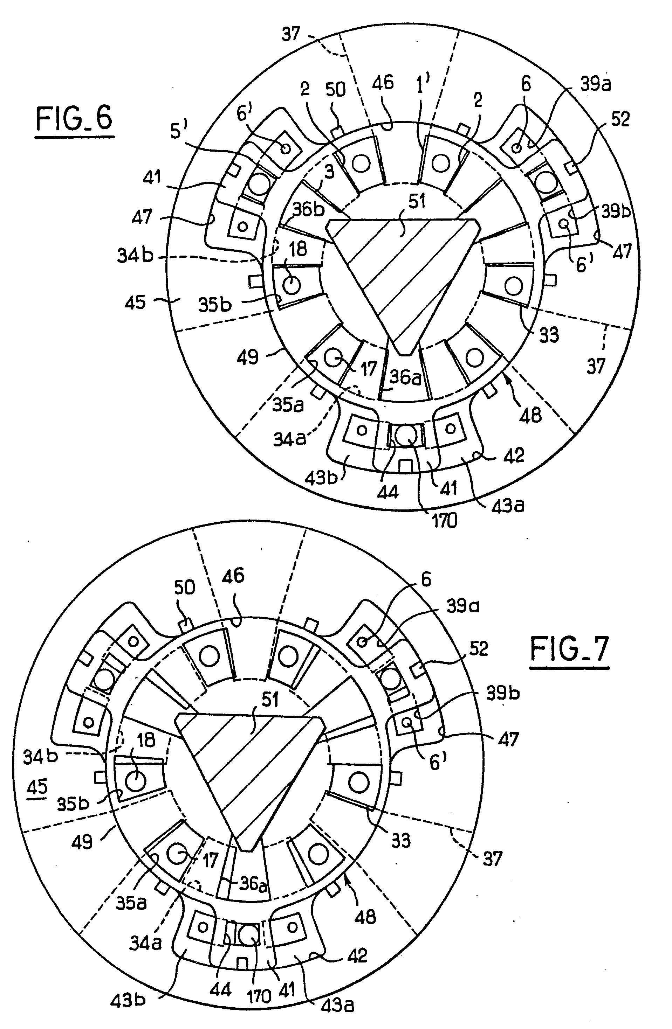

La figure 6 montre la réalisation pratique d'un distributeur de ce genre, représentée sous la forme d'une valve discoïde à rotor en étoile.

Le stator est constitué par un disque 45 pourvu d'une ouverture centrale qui comprend trois parties de surface clyindrique commune 46 et trois parties de surface cylindrique commune 47 d'un rayon supérieur aux premières et alternées entre les parties 46. Dans cette ouverture est monté de façon à effectuer un mouvement de rotation limité un rotor en étoile, désigné par la référence générale 48. Ce rotor comprend trois parties principales de surface cylindrique 49 qui s'ajustent à coulissement étanche avec les parties 46 du stator par l'intermédiaire de joints 50. Ces parties 49 sont séparées par trois bras radiaux 41 qui sont les mêmes que ceux indiqués par cette référence sur la figure 3.

Le rotor 48 est accouplé pour son actionnement en rotation à un arbre triangulaire 51 qui reçoit son impulsion d'entraînement de l'organe d'actionnement d'entrée, typiquement un volant de direction. Le stator est fermé sur ses deux faces axiales, de part et d'autre du rotor, par des couvercles, non représentés sur la figure 6 mais constituant les parties de stator 28 et 30, qui ne laissent passer que l'arbre 51. Ce dernier est relié, par un accouplement à course morte à l'arbre de sortie du distributeur qui aboutit au mécanisme de direction. Les bras du rotor viennent s'ajuster à coulissement étanche sur les surfaces 47 du stator par l'intermédiaire de joints 52.

Les différentes références de la figure 3 ont été transposées sur des parties correspondantes de la figure 6. On peut voir ainsi que les conduits d'arrivée de fluide sous pression 37 sont constitués par des rainures radiales sur les faces du stator ou de ses couvercles, qui débouchent directement dans les cavités d'entrée 33 tandis que les cavités de la partie de rotor 29 de la figure 3 (35a, 35b et 36a, 36b) sont constituées par des lumières qui traversent le disque de rotor de la figure 6. Ces éléments de valve, centrés par rapport aux parties de surface cylindrique 46 du stator, correspondent, comme on peut le voir, aux parties de stator 28 et de rotor 29 de la figure 3. De même, les éléments de valves décrits en relation avec les parties de stator 30 et de rotor 31 de la figure 3 sont réalisées en correspondance avec les bras 41 du rotor, comme on peut le voir d'après les références correspondantes, utilisées également sur la figure 6.

Le fonctionnement du distributeur hydraulique décrit est le suivant:

Les figures 3 et 6 représentent le système en position centrale de repos et on va y différencier le fonctionnement qui correspond à la commande de la servo-direction et celui qui correspond à la régulation de la réaction.

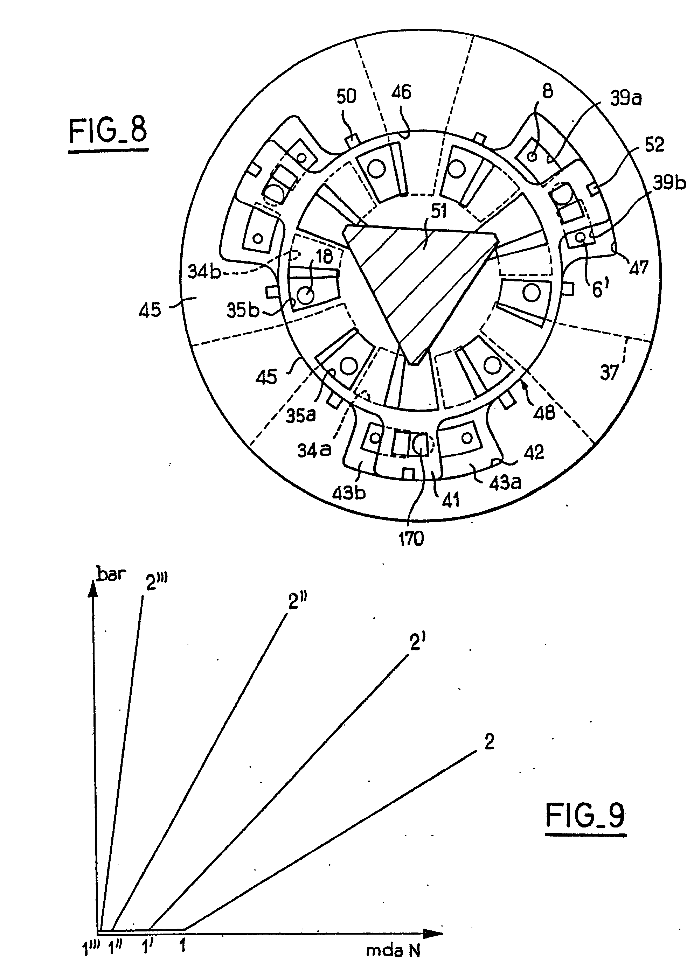

Dans le premier cas, le fluide sous pression arrivant par le conduit 37 se distribue proportionnellement des deux côtés de la cavité d'entrée 33, en passant d'une part par les étranglements 1, 2 et 3 en direction de la cavité de décharge 36a et du conduit de décharge 38, ainsi que, d'autre part, par les étranglements 1', 2' et 3' vers la cavité de décharge 36b et l'autre conduit de décharge 38; les cavités de travail 35a et 35b sont à pression égale et l'actionneur d'assistance 19 reste inactif, centré en position de repos par les réactions propres du mécanisme commandé (de direction) pendant la marche du véhicule. Dans le second cas, il se forme deux voies parallèles qui, à partir de l'étranglement variable 4, de l'ouverture d'entrée 170 et de la lumière 44 du rotor, bifurquent symétriquement vers la décharge 15 en passant par les étranglements 5 et 6 d'une part, et 5' et 6' de l'autre, afin que les cavités de réaction 39a et 39b se maintiennent aux mêmes pressions, de même que les chambres 43a et 43b sans appliquer de réaction au bras 41 du rotor. Cette phase du fonctionnement est représentée par les figures 3 et 6, et sur la caractéristique de la figure 9 correspond au point d'origine 0.

Lorsqu'on tourne le volant de direction, il se produit un mouvement du rotor par rapport au stator dans un sens déterminé à partir de la position centrale de repos décrite ci-dessus; on supposera, par exemple, que le rotor 48 (29 et 31 sur la figure 3) se déplace vers la droite par rapport au stator 45 (28 et 30 sur la figure 3).

La disposition est alors telle (figures 4 et 7) que l'étranglement 5 de l'ensemble 11 (figures 1 et 3) se ferme en premier lieu, de manière à sélectionner automatiquement le sens de réaction vers la gauche étant donné que, d'une part les chambres 39a et 43a, isolées de la lumière d'entrée 44, se maintiennent à la pression du conduit de décharge 40 tandis que l'augmentation de débit provoquée par l'élargissement de l'étranglement 5' fait augmenter, sous l'effet de l'étranglement fixe 6', la pression dans la cavité 39b et, par suite, dans la chambre de réaction 43b. Si la rotation se poursuit un peu plus, les étranglements 2 et 3' deviennent alors opérant. Le premier d'entre eux introduit un étranglement qui réduit linéairement la section de passage tandis que le second introduit un étranglement fixe à partir de cet instant; à ce moment précis, les sections de passage formées par les deux étranglements sont égales, ce qui provoque une augmentation uniforme des pressions dans les chambres 35b, 33, 35a et 34b et, partant, des deux côtés de l'actionneur d'assistance 19 qui, en conséquence, n'effectue aucun travail. Ce fonctionnement est représenté par la section horizontale 0-1 de la caractéristique de la figure 9 (fonctionnement dit «central» du système).

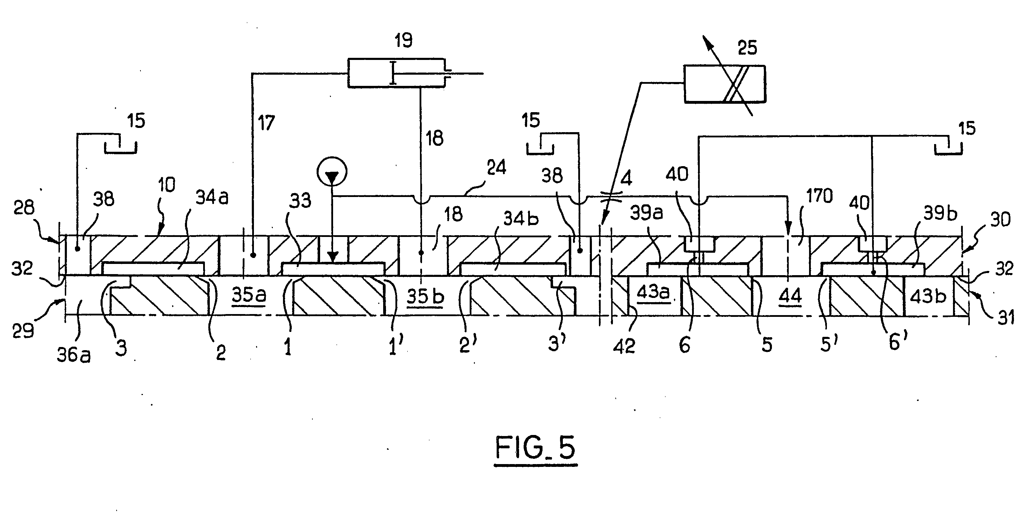

La poursuite du mouvement de rotation rend alors opérant l'étranglement 1', ce qui crée entre les chambres 35a et 35b, une pression différentielle, transmise à l'actionneur 19 par les conduits 17 et 18 afin de déclencher le mouvement d'assistance correspondant. D'autre part, étant donné que le fluide nécessaire pour produire la pression de réaction, venant du conduit d'entrée 170, dans la lumière 44, fournit toujours une pression proportionnelle à la pression différentielle qui actionne le cylindre 19, la force de réaction appliquée est également proportionnelle à cette pression différentielle. Cette phase du fonctionnement est celle représentée par les figures 5 et 8 et par la section 1-2 de la caractéristique de la figure 9.

Jusqu'ici, on a supposé que l'étranglement 4 était maintenu totalement ouvert et n'avait pas bougé de cette position pendant toute la durée du fonctionnement décrit, ce qui fait que le distributeur a fourni un point zéro correspondant à la section 0-1 et une caractéristique de pression d'assistance 1-2 avec une pression de réaction proportionnelle à la pression différentielle d'assistance. Si, par contre, on ferme plus ou moins l'étranglement 4 pour fournir à l'ensemble de réaction 11 des débits différents de moindre importance, la pression d'entrée de l'ensemble 10 augmente en conséquence, ainsi que la pression différentielle d'assistance, c'est-à-dire que l'on a maintenant une pression d'assistance pour un couple d'actionnement moindre. En d'autres termes, si l'on module la position de l'étranglement 4, il est possible d'obtenir n'importe quelle autre caractéristique située dans la zone gauche de la courbe 0-1-2, par exemple comme indiqué par les profils 0-1'-2', 0-1''-2'', etc.

Ce fonctionnement est évidemment identique, mais inversé, lorsque le distributeur est actionné dans le sens contraire à celui décrit.

Dans le mode de réalisation de la figure 2, les étranglements variables désignés sur cette figure par les repères 7 et 7', remplaçant les étranglements fixes 6 et 6' de la figure 1, sont modulables en fonction du mouvement du rotor du distributeur, comme symbolysé par la commande 27. Cette variante a pour but de supprimer les bruits qui, dans la pratique, se produisent lors du passage du fluide hydraulique au travers des étranglements fixes et étroits 6 et 6'. Elle ressort plus clairement de la description suivante.

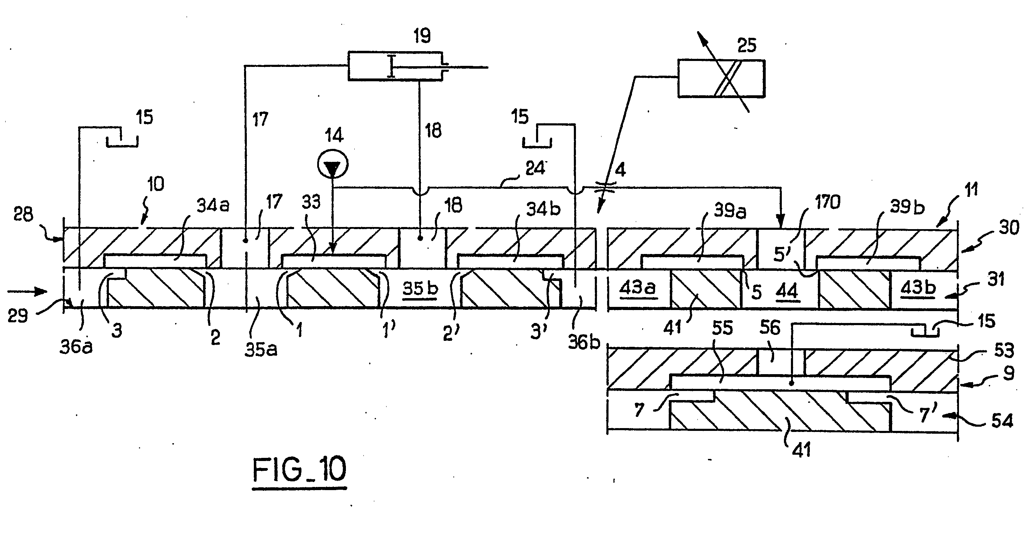

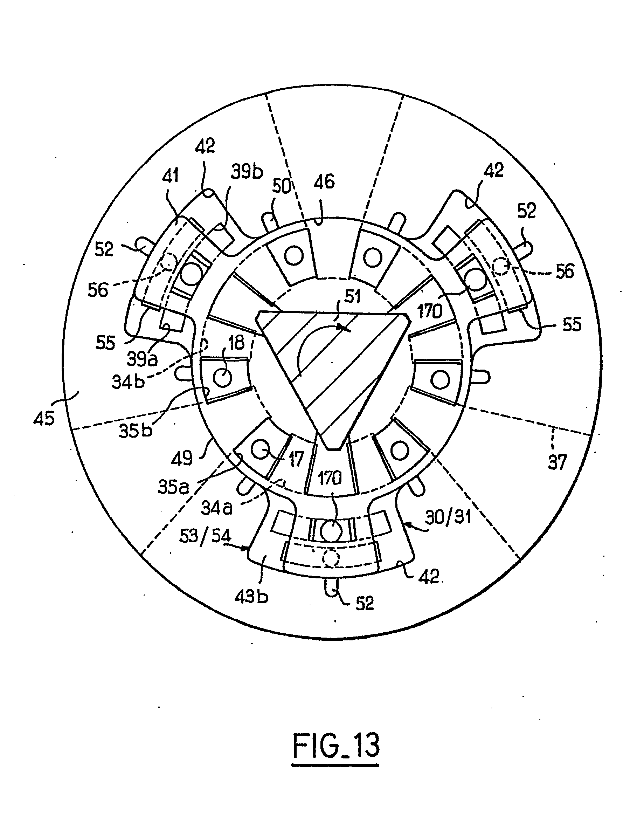

Les figures 10 et 13, où l'on a indiqué par les mêmes références numériques les organes communs des figures 3 et 6 précédentes, représentent un distributeur réalisé conformément au schéma de la figure 2.

On a supprimé dans cette variante les conduits de décharge 40 qui partaient des cavités de réaction 39a et 39b et on a prévu par contre un troisième groupe de valves désigné par la référence générale 9, comprenant les parties de stator 53 et de rotor 54. Ce groupe est constitué, dans le cas des figures 10 et 13, par une prolongation radiale du bras de réaction 41 et de la cavité de réaction 42. Comme on peut le voir, la partie de stator 53 comporte une cavité supplémentaire 55 parallèle aux cavités de réaction 39a et 39b, radialement décalées vers l'extérieur de celles-ci, et qui recouvre très légèrement la partie adjacente (extérieure) du bras de réaction 41 et d'où part un conduit 56 aboutissant à la décharge 15. Les joints 52 sont avantageusement montés ici dans la couronne de stator 45. La partie extérieure du bras 41 est muni latéralement pour sa part de deux larges gradins rectangulaires 7 et 7' en regard des extrémités de la cavité 55, dont les dimensions permettent de produire un étranglement prédéterminé équivalent à celui des passages calibrés 6 et 6', à partir du moment où le mouvement du rotor déplace le bras 41 de sa position centrale de repos représentée sur les figures 10 et 13 pour rendre les étranglements 7 et 7' opérants.

Le fonctionnement dans ce cas est sensiblement identique à celui qui a été décrit plus haut, étant donné que les gradins 7 et 7' jouent le même rôle, sélectif cette fois, que les étranglements fixes 6 et 6'.

## Revendications

1. Distributeur hydraulique pour servo-mécanisme, plus particulièrement pour servo-direction de véhicule automobile, comprenant un organe primaire (29, 31; 48) et un organe secondaire (28, 30; 45) définissant mutuellement des moyens de valves de distribution (1, 2, 3; 1', 2', 3') entre une source de pression (14) et une décharge (15) pour un dispositif d'assistance (19) et associés par l'intermédiaire d'un accouplement à course morte permettant un déplacement relatif limité entre les organes primaire et secondaire de part et d'autre d'une position centrale, l'organe primaire (29, 31; 48) étant relié à un organe d'actionnement d'entrée (51) du distributeur et à un dispositif de réaction (11) à chambres opposées (43a, 43b) actionné hydrauliquement par des pressions de réaction fournies, à partir d'une source de pression (14), par un moyen de valve à fonction logique OU (5, 5') de présélection du sens de la réaction à appliquer en fonction du déplacement relatif entre les organes primaire et secondaire du distributeur, ledit moyen de valve à fonction OU (5, 5') étant indépendant des cavités de travail du distributeur et étant constitué par des paires de bords coopérants opposés définis, d'une part, par deux premières cavités (39a, 39b) espacées l'une de l'autre dans la direction de déplacement relatif entre les organes primaire et secondaire, formées dans la surface de travail (32) de l'un (30) de ces organes primaire et secondaire et communiquant en parallèle (40) avec la décharge (15) et avec les deux côtés (43a, 43b) du dispositif de réaction, et d'autre part, par une troisième cavité (44) formée dans la surface de travail (32) de l'autre (31) des organes primaire et secondaire, entre les deux premières cavités (39a, 39b) et communiquant en permanence avec une source de pression de réaction (14).

2. Distributeur, selon la revendication 1, caractérisé essentiellement en ce que le distributeur hydraulique est du type à rotor en étoile (48).

3. Distributeur, selon la revendication 1 ou la revendication 2, caractérisé en ce que chacun des premières cavités (39a, 39b) communique avec une chambre de réaction correspondante (43a, 43b) du dispositif de réaction (11) incorporé dans le distributeur.

4. Distributeur, selon l'une des revendications 1 à 3, caractérisé en ce que les chambres de réaction sont reliées en parallèle à la décharge (15), via des étranglements de réaction (6, 6'; 7, 7') formés dans le distributeur.

5. Distributeur, selon la revendication 4, caractérisé en ce que les étranglements de réaction sont constitués par des passages calibrés (6, 6') formés aux sorties (39a,, 39b) des chambres de réaction (43a, 43b).

6. Distributeur, selon la revendication 4, caractérisé en ce que les étranglements de réaction (7, 7') sont variables en fonction du mouvement relatif des organes primaire et secondaire du distributeur.

7. Distributeur, selon les revendications 2 et 6, où le dispositif de réaction comprend au moins un bras (41) du rotor en étoile (48) mobile à l'intérieur d'une cavité (47) du stator (45) du distributeur, définissant dans celle-ci les deux chambres de réaction opposées (43a, 43b), caractérisé en ce que les étranglements de réaction (7, 7') sont formés par des paires de bords opposés du bras (41) du rotor et d'une cavité (55) formée sur la surface complémentaire du stator du distributeur, en correspondance avec le bras (41) dans ladite position centrale.

8. Distributeur, selon la revendication 7, caractérisé en ce que l'un des bords de chaque paire est conformé de manière à constituer un gradin rectangulaire inopérant en position centrale et qui, lorsqu'il est mis en oeuvre hors de cette position centrale, crée une section de passage constante prédéterminée (7, 7').

9. Distributeur, selon l'une des revendications 1 à 8, caractérisé en ce que la source de pression de réaction est la source de pression (14) du distributeur.

10. Distributeur, selon la revendication 9, caractérisé en ce qu'il comprend un étranglement (4) modulable extérieurement (25) entre la source de pression (14) et la troisième cavité (44) du moyen de valve à fonction OU (5, 5').

**Patentansprüche**

1. Hydraulischer Verteiler für einen Servomechanismus, insbesondere für eine Kraftfahrzeug-Servolenkung, mit einem ersten Ventilkörper (29, 31; 48) und einem zweiten Ventilkörper (28, 30; 45), die zusammen eine Verteilerventileinrichtung (1, 2, 3; 1', 2', 3') zwischen einer Druckquelle (14) und einem Niederdruckbereich (15) für eine Servovorrichtung (19) bilden und die durch eine Totgangverbindung einander zugeordnet sind, die eine begrenzte Relativverschiebung zwischen den beiden Ventilkörpern beidseitig zu einer Mittelstellung erlaubt, wobei der erste Ventilkörper (29, 31; 48) verbunden ist mit einem zur Betätigung dienenden Eingangsglied (51) des Verteilers und einer Reaktionsvorrichtung (11) mit entgegengesetzten Kammern (43a, 43b), die hydraulisch betätigt wird durch die auftretenden Reaktionsdrücke von einer Druckquelle (14) über ein Logikventil (5, 5') der Logikfunktion ODER zur Vorwahl des Richtungssinnes der aufgebrachten Reaktionskräfte in Abhängigkeit von der Relativverschiebung der beiden Ventilkörper, wobei das ODER-Logikventil (5, 5') unabhängig von den Arbeitskammern des Verteilers ist und von entgegengerichteten zusammenwirkenden Steuerkantenpaaren gebildet wird, die definiert sind einerseits durch zwei erste Ausnehmungen (39a, 39b), die in der Richtung der Relativverschiebung der beiden Ventilkörper voneinander beabstandet sind, in der Arbeitsfläche (32) eines (30) der beiden Ventilkörper gebildet sind und in Parallelschaltung (40) mit dem Niederdruckbereich (15) und den beiden Seiten (43a, 43b) der Reaktionsvorrichtung in Verbindung stehen, und andererseits durch eine dritte Ausnehmung (44), die in der Arbeitsfläche (32) des anderen Ventilkörpers (31) zwischen den beiden ersten Ausnehmungen (39a, 39b) gebildet ist und dauernd mit einer Reaktionsdruckquelle in Verbindung steht.

2. Verteiler nach Anspruch 1, im wesentlichen dadurch gekennzeichnet, dass der hydraulische Verteiler als Verteiler mit sternförmigem Rotor (48) ausgebildet ist.

3. Verteiler nach Anspruch 1 oder 2, dadurch gekennzeichnet, dass jede der ersten Kammern (39a, 39b) mit einer entsprechenden Reaktionskammer (43a, 43b) der in den Verteiler eingearbeiteten Reaktionsvorrichtung (11) in Verbindung steht.

4. Verteiler nach einem der Ansprüche 1-3, dadurch gekennzeichnet, dass die Reaktionskammern in Parallelschaltung mit dem Niederdruckbereich (15) über im Verteiler gebildete Drosselstellen (6, 6'; 7, 7') verbunden sind.

5. Verteiler nach Anspruch 4, dadurch gekennzeichnet, dass die Drosselstellen aus kalibrierten Kanälen (6, 6') bestehen, die in den Auslässen (39a, 39b) der Reaktionskammern (43a, 43b) gebildet sind.

6. Verteiler nach Anspruch 4, dadurch gekennzeichnet, dass die Drosselstellen (7, 7') in Abhängigkeit von der Relativbewegung des ersten und zweiten Ventilkörpers des Verteilers veränderlich sind.

7. Verteiler nach den Ansprüchen 2-6, bei dem die Reaktionsvorrichtung mindestens einen Arm (41) des sternförmigen Rotors (48) umfasst, der im Inneren einer Ausnehmung (47) des Stators (45) des Verteilers beweglich ist, wobei er in diesem die beiden entgegengerichteten Reaktionskammern (43a, 43b) bildet, dadurch gekennzeichnet, dass die Drosselstellen (7, 7') von Paaren gegenüberliegender Ränder des Armes (41) des Rotors und einer Ausnehmung (55) gebildet werden, die in der komplementären Oberfläche des Stators des Verteilers gebildet ist, die in der Mittelstellung mit dem Arm (41) korrespondiert.

8. Verteiler nach Anspruch 7, dadurch gekennzeichnet, dass der eine Rand jedes Ränderpaares so geformt ist, dass er eine rechteckige Stufe bildet, die in der Mittelstellung funktionslos ist und die bei einer Verschiebung aus der Mittelstellung einen vorgegebenen konstanten Durchlassquerschnitt (7, 7') bildet.

9. Verteiler nach einem der Ansprüche 1-8, dadurch gekennzeichnet, dass die Reaktionsdruckquelle die Druckquelle (14) des Verteilers ist.

10. Verteiler nach Anspruch 9, dadurch gekennzeichnet, dass er eine ausserhalb (25) modulierbare Drosselstelle (4) zwischen der Druckquelle (14) und der dritten Ausnehmung (44) des ODER-Logikventils (5, 5') aufweist.

**Claims**

1. A hydraulic distributor for a servo mechanism, in particular for a servo steering mechanism of an automotive vehicle, comprising a primary member (29, 31; 48) and a secondary member (28, 30; 45) mutually defining distribution valve means (1, 2, 3; 1', 2', 3') between a pressure source (14) and a discharge area (15) for a servo device (19) and associated via a lost-motion connection permitting a limited relative displacement between the primary and secondary members in opposite directions from a central position, the primary member (29, 31; 48) being connected to an actuating input member (41) of the distributor and to a reaction device (11) having opposed chambers (43a, 43b) actuated by the generated hydraulic reaction pressures from a pressure source (14) by a valve means of the logic function OR (5, 5') for preselection of the sense of reaction to be applied in response to relative displacement between the primary and secondary members of the distributor, said valve means of the function OR (5, 5') being independent of the cavities of the distributor and being constituted by pairs of cooperating opposed edges defined on the one hand by two first cavities (39a, 39b) spaced from each other in the direction of relative displacement between the primary and secondary members, formed in the work surface (32) of the one (30) of the primary and secondary members and communicating in parallel (40) with the discharge area (15) and with the two sides (43a, 43b) of the reaction device, and on the other hand by a third cavity (44) formed in the work surface (32) of the other (31) of the primary and secondary members between the two first cavities (39a, 39b) and permanently communicating with a reaction pressure source (14).

2. Distributor according to claim 1, characterized essentially in that the hydraulic distributor is of the star rotor (48) type.

3. Distributor according to claim 1 or claim 2, characterized in that each of the first cavities (39a, 39b) communicates with a corresponding reaction chamber (43a, 43b) of the reaction device (11) incorporated in the distributor.

4. Distributor according to any of claims 1-3, characterized in that the reaction chambers are connected in parallel to the discharge area (15) via reaction restrictions (6, 6'; 7, 7') formed in the distributor.

5. Distributor according to claim 4, characterized in that the reaction restrictions are constituted by calibrated passages (6, 6') formed in the outlets (39a, 39b) of the reaction chambers (43a, 43b).

6. Distributor according to claim 4, characterized in that the reaction restrictions (7, 7') are variable in response to relative movement of the primary and secondary members of the distributor.

7. Distributor according to claims 2 and 6, wherein the reaction device comprises at least one arm (41) of the stator (48) movable within a cavity (47) of the stator (45) of the distributor, defining in the latter the two opposed reaction chambers (43a, 43b), characterized in that the reaction restrictions (7, 7') are formed by pairs of opposed edges of the arm (41) of the rotor and a cavity (55) provided on the complementary surface of the stator of the distributor, corresponding to the arm (41) in said central position.

8. Distributor according to claim 7, characterized in that the one of the edges of each pair is shaped such that it constitutes a rectangular step inoperative in the central position and providing a predetermined constant throughflow section (7, 7') when it is operative outside of said central position.

9. Distributor according to any of claims 1 to 8, characterized in that the reaction pressure source is the pressure source (14) of the distributor.

10. Distributor according to claim 9, characterized in that it comprises a restriction (4) between the pressure source (14) and the third cavity (44) of the valve means of the logic function OR (5, 5') to be modulated from the outside (25).

0 112 201

FIG.1

FIG.2

9

## FIG.3

## FIG.4

FIG_5

FIG_6

FIG_7

FIG_8

FIG_9

0 112 201

FIG_10

FIG_11

FIG.12

FIG_13

FIG. 14

FIG_15